# EUROPÄISCHE PATENTSCHRIFT

(11) **EP 2 044 682 B1**
(45) Veröffentlichungstag und Bekanntmachung des Hinweises auf die Patenterteilung: **09.06.2010**
(21) Anmeldenummer: 07765756.7
(22) Anmeldetag: 02.07.2007
(51) Int. Cl.: H02P 7/24

(54) **SCHALTUNGSANORDNUNG ZUR MESSUNG DER STROMAUFNAHME EINES DURCH PULSWEITENMODULATION GESTEUERTEN GLEICHSTROMMOTORS**
CIRCUIT ARRANGEMENT FOR MEASURING THE CURRENT CONSUMPTION OF A PULSE-WIDTH MODULATION-CONTROLLED DIRECT-CURRENT MOTOR
CIRCUITERIE DE MESURE DE LA CONSOMMATION DE COURANT D'UN MOTEUR À COURANT CONTINU COMMANDÉ PAR MODULATION D'IMPULSIONS EN DURÉE

(30) Priorität: 14.07.2006 DE 102006032737
(43) Veröffentlichungstag der Anmeldung: 08.04.2009
(73) Patentinhaber: Robert Bosch GmbH, 70442 Stuttgart (DE)
(72) Erfinder: KOCH, Stefan, 77876 Kappelrodeck (DE); KAHLES, Patric, 77815 Buehl (DE)
(86) Internationale Anmeldenummer: PCT/EP2007/056638
(87) Internationale Veröffentlichungsnummer: WO 2008/006727

(56) Entgegenhaltungen:
- WO-A-2004/086601
- DE-A1- 4 329 919
- JP-A- 4 172 984
- JP-A- 2000 080 858

## Beschreibung

### Stand der Technik

Die Erfindung geht aus von einer Schaltungsanordnung zur Messung der Stromaufnahme eines durch Pulsweitenmodulation gesteuerten, aus einem Gleichspannungsnetz gespeisten Gleichstrommotors, insbesondere eines Antriebsmotors für das Kühlgebläse eines Kraftfahrzeuges, nach der Gattung des Anspruchs 1. Eine derartige Schaltungsanordnung ist aus der WO 2004/030173 A1 bekannt, wobei als Halbleiterschalteinrichtung ein Current-Sense-FET dient, welcher auf der Low-Side der Schaltungsanordnung zwischen dem Gleichstrommotor und dem Massepol des Gleichspannungsnetzes angeordnet ist. Zur Auswertung der Sense-Signale des Sense-FET dient ein Komparator oder Operationsverstärker, dessen nicht invertierender Eingang an einer festen Bezugsspannung liegt und dessen Ausgangsimpulse als Maß für die Größe des Motorstromes in einem nachgeschalteten Mikrocontroller gezählt werden. Das Eingangssignal wird hierbei durch den motorstromproportionalen Spannungsabfall an einem sogenannten Sensewiderstand gebildet. Eine Schaltung zum Auswerten der Signale eines Current-Sense-Fet wird im Dokument DE 4329919 beschrieben.

### Offenbarung der Erfindung

Die erfindungsgemäße Schaltungsanordnung mit den Merkmalen des unabhängigen Anspruchs ist gegenüber dem vorgenannten Stand der Technik insofern vorteilhaft, als die mit zusätzlichen Kosten verbundene Erzeugung einer negativen Versorgungsspannung für Einrichtung zur Stromauswertung entfällt und der Motor im Stillstand spannungslos ist. Außerdem kann die Messgenauigkeit der Schaltungsanordnung gegenüber der Auswertung der Sense-Signale über einen SenseWiderstand deutlich erhöht werden, wobei es zweckmäßig ist, wenn der Messstrom-Anschluss (IS) des Sense-FET mit dem invertierenden Eingang des Operationsverstärkers und der Kelvin-Anschluss (KS) mit dem nicht invertierenden Eingang des Operationsverstärkers über einen Filter verbunden sind und der Ausgang des Operationsverstärkers auf seinen invertierenden Eingang rückgekoppelt ist.

Hinsichtlich der Auswertung des Ausgangssignals des Operationsverstärkers ist es vorteilhaft, wenn dieses tiefpassgefiltert als integriertes Mittelwertsignal einem Analog/Digital (A/D)-Eingang eines als Steuereinheit dienenden Mikrocontrollers zugeführt wird. Für die Bereitstellung der Versorgungsspannung des Operationsverstärkers hat es sich als vorteilhaft erwiesen, wenn diese über eine Ladungspumpe aus den Ansteuersignalen des Sense-FET gewonnen wird. Die Höhe dieser Signale liegt über der Versorgungsspannung der Schaltungsanordnung und kann daher nach einer Gleichrichtung und Glättung vorteilhaft für die Spannungsversorgung des Operationsverstärkers genutzt werden. Stattdessen kann jedoch auch die Spannung des Gleichspannungsnetzes direkt oder auch eine getrennte Spannungsquelle benutzt werden, welche die Versorgungsspannung für den Operationsverstärker aus der Netzspannung über eine Ladungspumpe liefert.

Für den Betrieb der Halbleiter-Schalteinrichtung ist es wichtig, diese vor Spannungsspitzen beim Abschalten des Motors zu schützen. Hierzu ist es vorteilhaft, eine Freilaufschaltung für den Motor mit einer Verpolschutzeinrichtung zu kombinieren, so dass die Schaltungseinrichtung gleichzeitig und ohne nennenswerten Mehraufwand gegen eine Verpolung beim Anschluss des Gleichspannungsnetzes geschützt ist.

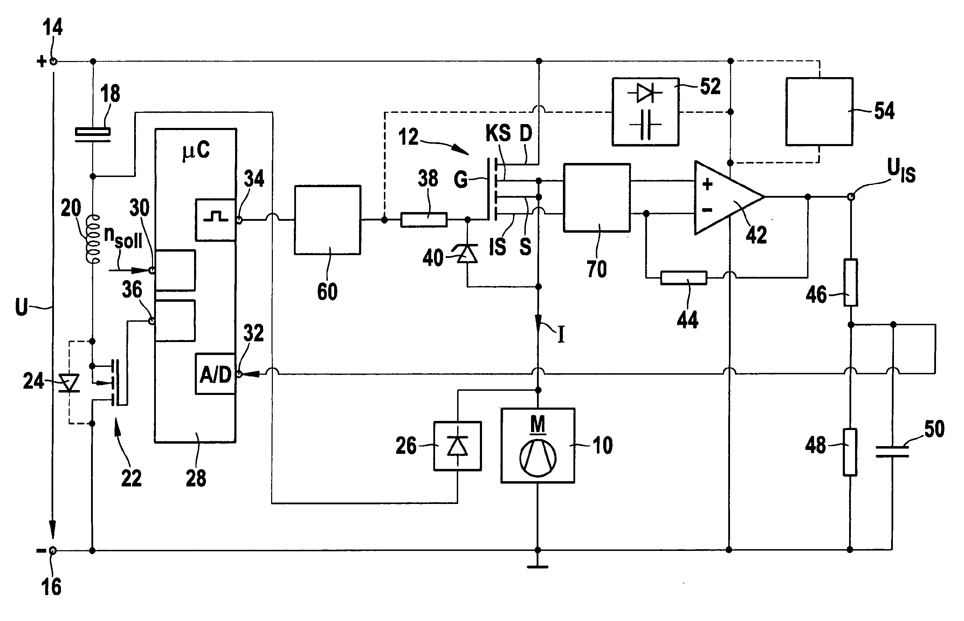

### Kurze Beschreibung der Zeichnung

Ein Ausführungsbeispiel der Erfindung ist in der Zeichnung dargestellt und in der nachfolgenden Beschreibung näher erläutert.

Die Figur zeigt eine Schaltungsanordnung zur Überwachung der Stromaufnahme eines aus dem Bordnetz eines Kraftfahrzeuges gespeisten Antriebsmotors für das Kühlgebläse des Fahrzeuges.

### Ausführungsform der Erfindung

In der Figur ist mit 10 ein Kühlgebläse eines Kraftfahrzeuges bezeichnet, welches als Antriebsmotor einen durch Pulsweitenmodulation gesteuerten Gleichstrommotor M besitzt, der über eine Halbleiterschalteinrichtung in Form eines Current-Sense-FET 12 an ein Gleichspannungsnetz mit der Spannung U zwischen einem Pluspol 14 und einem an Masse liegenden Minuspol 16 angeschlossen ist. Die Elektroden des Sense-FET sind mit G (Gate), D (Drain), S (Source), KS (Kelvin Source) und IS (Messstrom-Source) bezeichnet.

Am Eingang der Schaltungsanordnung liegt die Reihenschaltung eines Elektrolytkondensator 18, einer Drossel 20 und eines invers betriebenen n-Kanal-MOS-FET mit einer integrierten Diode 24, welche eine Glättungseinrichtung für die Versorgungsspannung U und einen Verpolschutz gegen Vertauschung der Plus- und Minus- Anschlüsse des Gleichspannungsnetzes bilden. Die Drossel 20 und der MOS-FET 22 liegen gleichzeitig im Freilaufkreis des Motors M in Reihe mit einer Freilaufeinrichtung 26, welche zwischen dem Kondensator 18 und der Drossel 20 angeschlossen ist. Die integrierte Diode 24 des MOS-FET 22 liegt in Durchlassrichtung zwischen dem Pluspol 14 und dem Minuspol 16 des Gleichspannungsnetzes.

Als Steuereinheit 28 für den Current-Sense-FET 12 dient ein Mikrocontroller, welcher an einem Eingang 30 ein Steuersignal für die der Solldrehzahl nₛₒₗₗ entsprechende Motorspannung und an einem Analog/Digital-Eingang 32 das aufbereitete Messsignal U_{IS} des Sense-FET 12 erhält. Ein Ausgang 34 des Mikrocontrollers steuert mittelbar über einen Spannungsumsetzer 60 mit einer Frequenz von cirka 18kHz den Sense-FET 12. Ein Ausgang 36 schaltet bei richtiger Polung der Anschlüsse 14,16 des Gleichspannungsnetzes den MOS- FET 22 dauerhaft ein. Die Gate-Elektrode G des Sense-FET 12 kann zusätzlich durch eine Schutzbeschaltung aus einem Widerstand 38 und einer Zehnerdiode 40 gegen Überspannungen geschützt werden.

Die Aufbereitung des dem Motorstrom I entsprechenden Sense-Signals U_{IS} erfolgt durch einen Operationsverstärker 42, dessen invertierender Eingang mit dem Messstrom-Anschluss IS und dessen nicht invertierender Eingang mit dem Kelvin-Anschluss KS des Current-Sense-FET 12 über einen Filter 70 verbunden sind. Der Ausgang des Operationsverstärkers 42 ist über einen Widerstand 44 auf seinen invertierenden Eingang rückgekoppelt und liegt außerdem über einem Spannungsteiler aus zwei Widerständen 46 und 48 am Masseanschluss 16 des Gleichspannungsnetzes. Dem Widerstand 48 ist ein Kondensator 50 parallel geschaltet, welcher mit dem Widerstand 46 zusammen einen Tiefpass bildet zum Abgriff eines integrierten Mittelwertsignals der Messspannung U_{IS}, die dem Eingang 32 der Steuereinheit 28 als Analogsignal zugeführt wird. Die Spannungsversorgung des Operationsverstärkers 42 erfolgt dabei über eine Gleichrichter- und Glättungseinrichtung 52, welche an den Signalausgang 34 der Steuereinheit 28 angeschlossen ist und über den Spannungsumsetzer 60 aus dieser Signalspannung die Speisespannung des Operationsverstärkers 42 erzeugt. Wahlweise, jedoch nicht zur Erfindung gehörend, kann die Versorgungsspannung für den Operationsverstärker 42 auch aus dem Gleichspannungsnetz 14,16 erzeugt werden, wobei der positive Versorgungsanschluss des Operationsverstärkers 42 entweder direkt oder über einen Spannungsumsetzer 54 mit dem Pluspol 14 des Gleichspannungsnetzes U verbunden wird. Alle genannten Varianten sind in der Zeichnung dargestellt. Der negative Versorgungsanschluss des Operationsverstärkers 42 ist mit der Masseleitung und dem Minuspol 16 des Gleichspannungsnetzes verbunden.

Die Schaltungsanordnung arbeitet folgendermaßen:

Am Eingang 30 der Steuereinheit 28 wird ein Sollwert für die Motorspannung vorgegeben entsprechend einem Sollwertsignal nₛₒₗₗ für das Kühlgebläse 10 zur Bereitstellung der benötigten Kühlluftleistung, beziehungsweise der zur Erzeugung der Luftleistung benötigten Spannung des Motors M. Die Steuereinheit 28 liefert dementsprechend über ihren Ausgang 34 die Steuerimpulse für das Gate des Sense-FET 12.

Der Operationsverstärker 42 erhält über das Filter 70 an seinem nicht invertierenden Eingang von der Kelvin-Source KS des Sense-FET 12 ein Spannungssignal entsprechend dem Source Potential des Sense-FET und an seiner invertierenden Elektrode ein Sense-Signal proportional zum Motorstrom I. Durch die Rückkoppelung des Operationsverstärkers 42 über den Widerstand 44 liegt am Ausgang des Operationsverstärkers 42 das Messspannungssignal U_{IS} = -I_{S} R_{S}, wobei I_{S} den anteiligen Sensestrom des Motorstromes I und R_{S} den Rückkoppelungswiderstand 44 bezeichnet. Dieses Messspannungssignal U_{IS} liegt anteilig entsprechend der Größe der Widerstände 46 und 48 an dem Kondensator 50 an und wird als integriertes Mittelwertsignal dem A/D-Eingang der Steuereinheit 28 als Messgröße für den Motorstrom I zugeführt.

Die erfindungsgemäße Schaltungsanordnung liefert mit verhältnismäßig geringem Schaltungsaufwand ein präzises Messsignal und erlaubt eine sehr schnelle und sichere Überwachung des Motorstromes I, insbesondere für den Fall einer Schwergängigkeit oder eines Blockierens des Kühlgebläses 10.

## Patentansprüche

1. Schaltungsanordnung zur Messung der Stromaufnahme eines durch Pulsweitenmodulation gesteuerten, aus einem Gleichspannungsnetz (14, 16) gespeisten Gleichstrommotors (M), insbesondere eines Antriebsmotors für das Kühlgebläse (10) eines Kraftfahrzeuges, mit einer in Reihe mit dem Motor (M) liegenden Halbleiterschalteinrichtung mit einem Current-Sense-FET (12) als Schaltelement, wobei der Sense-FET (12) im Strompfad zwischen dem Pluspol (14) des Gleichspannungsnetzes (14,16) und dem Motor (M) angeordnet ist, und die Sense-Elektroden (K_{S},I_{S}) des Sense-FET (12) über ein Filter (70) mit den Eingängen eines Operationsverstärkers (42) verbunden sind, dessen Ausgangssignal (U_{IS}) über eine Steuereinheit (28) und einen Spannungsumsetzer (60) ein Steuersignal für die Gate-Elektrode (G) des Sense-FET (12) liefert, **dadurch gekennzeichnet, dass** die Versorgungsspannung des Operationsverstärkers (42) über einen Spannungsumsetzer (60) und eine Glättungseinrichtung (52) aus den Ansteuersignalen des Sense-FET (12) gewonnen wird.

2. Schaltungsanordnung nach Anspruch 1, **dadurch gekennzeichnet, dass** die Messstrom-Elektrode (IS) des Sense-FET (12) mit dem invertierenden Eingang und die Kelvin-Elektrode (KS) des Sense-FET (12) mit dem nicht invertierenden Eingang des Operationsverstärkers (42) verbunden sind und der Ausgang des Operationsverstärkers (42) auf seinen invertierenden Eingang rückgekoppelt ist.

3. Schaltungsanordnung nach Anspruch 1 oder 2, **dadurch gekennzeichnet dass** das Ausgangssignal (U_{IS}) des Operationsverstärkers (42) tiefpassgefiltert an die Steuereinheit (28) geliefert wird.

4. Schaltungsanordnung nach Anspruch 3, **dadurch gekennzeichnet, dass** das Ausgangssignal (U_{IS}) des Operationsverstärkers (42) einem A/D-Wandler-Eingang (32) der Steuereinheit (28) als integriertes Mittelwertsignal zugeführt wird.

5. Schaltungsanordnung nach einem der vorhergehenden Ansprüche, **dadurch gekennzeichnet, dass** die Versorgungsspannung des Operationsverstärkers (42) der Netzspannung (U) des Gleichspannungsnetzes (14,16) entspricht.

6. Schaltungsanordnung nach einem der vorhergehenden Ansprüche, **dadurch gekennzeichnet, dass** der Sense-FET (12) durch eine mit einer Verpolschutzeinrichtung (22) gekoppelte Freilaufschaltung (26) für den Gleichstrommotor (M) geschützt ist.

## Claims

1. Circuit arrangement for measuring the current consumption of a DC motor (M) controlled by pulse width modulation and supplied from a DC voltage system (14, 16) in particular of a drive motor for the cooling fan (10) of a motor vehicle, comprising a semiconductor switching device - disposed in series with the motor (M) - with a current sense FET (12) as switching element, the sense FET (12) being arranged in the current path between the positive pole (14) of the DC voltage system (14, 16) and the motor (M), and the sense electrodes (K_{S},I_{S}) of the sense FET (12) being connected via a filter (70) to the inputs of an operational amplifier (42), the output signal (U_{IS}) of which supplies, via a control unit (28) and a voltage converter (60), a control signal for the gate electrode (U) of the sense FET (12), **characterized in that** the supply voltage of the operational amplifier (42) is obtained from the drive signals of the sense FET (12) by means of a voltage converter (60) and a smoothing device (52).

2. Circuit arrangement according to Claim 1, **characterized in that** the measurement current electrode (IS) of the sense FET (12) is connected to the inverting input and the Kelvin electrode (KS) of the sense FET (12) is connected to the non-inverting input of the operation amplifier (42) and the output of the operational amplifier (42) is coupled with feedback to the inverting input thereof.

3. Circuit arrangement according to Claim 1 or 2, **characterized in that** the output signal (U_{IS}) of the operational amplifier (42) is supplied to the control unit (28) after having been subjected to low-pass filtering.

4. Circuit arrangement according to Claim 3, **characterized in that** the output signal (U_{IS}) of the operational amplifier (42) is fed to an A/D converter input (32) of the control unit (28) as an integrated average value signal.

5. Circuit arrangement according to any of the preceding claims, **characterized in that** the supply voltage of the operational amplifier (42) corresponds to the system voltage (U) of the DC voltage system (14, 16).

6. Circuit arrangement according to any of the preceding claims, **characterized in that** the sense FET (12) is protected by a freewheeling circuit (26) for the DC motor (M), said freewheeling circuit being coupled to a polarity-reversal protection device (22).

## Revendications

1. Circuit de mesure du courant consommé par un moteur à courant continu (M) commandé par modulation de la largeur des impulsions et alimenté par un réseau (14, 16) à tension continue, en particulier du moteur d'entraînement du ventilateur de refroidissement (10) d'un véhicule automobile, le circuit présentant
un dispositif de commutation à semi-conducteur raccordé en série sur le moteur (M) et doté d'un FET (12) de détection de courant qui sert d'élément de commutation,
le FET (12) de détection étant disposé dans le parcours de courant qui relie le pôle positif (14) du réseau (14, 16) à tension continue et le moteur (M),
les électrodes de détection (K_{S}, I_{S}) du FET (12) de détection étant reliées par l'intermédiaire d'un filtre (70) aux entrées d'un amplificateur opérationnel (42) dont le signal de sortie (U_{IS}) délivre par l'intermédiaire d'une unité de commande (28) et d'un convertisseur de tension (60) un signal de commande de l'électrode de grille (G) du FET (12) de détection,
**caractérisé en ce que**
la tension d'alimentation de l'amplificateur opérationnel (42) est obtenue par l'intermédiaire d'un convertisseur de tension (60) et d'un dispositif de lissage (52) à partir des signaux de commande du FET (12) de détection.

2. Circuit selon la revendication 1, **caractérisé en ce que** l'électrode (IS) de courant de mesure du FET (12) de détection est reliée à la borne inversante et l'électrode Kelvin (KS) du FET (12) de détection à l'entrée non inversante de l'amplificateur opérationnel (42) et **en ce que** la sortie de l'amplificateur opérationnel (42) rétroagit sur son entrée inversante.

3. Circuit selon les revendications 1 ou 2, **caractérisé en ce que** le signal de sortie (U_{IS}) de l'amplificateur opérationnel (42) subit un filtrage passe-bas avant d'être délivré à l'unité de commande (28).

4. Circuit selon la revendication 3, **caractérisé en ce que** le signal de sortie (U_{IS}) de l'amplificateur opérationnel (42) est amené à l'entrée (32) d'un convertisseur A/N de l'unité de commande (28) sous la forme d'un signal de valeur moyenne intégrée.

5. Circuit selon l'une des revendications précédentes, **caractérisé en ce que** la tension d'alimentation de l'amplificateur opérationnel (42) correspond à la tension (U) du réseau (14, 16) à tension continue.

6. Circuit selon l'une des revendications précédentes, **caractérisé en ce que** le FET (12) de détection est protégé par un circuit (26) de fonctionnement à vide du moteur (M) à courant continu couplé à un dispositif (22) de protection contre les inversions de polarité.
